# EUROPÄISCHE PATENTANMELDUNG

(11) **EP 4 420 991 A2**
(43) Veröffentlichungstag der Anmeldung: **28.08.2024**
(21) Anmeldenummer: 24179504.6
(22) Anmeldetag: 29.06.2021
(51) Int. Cl.: B65B 51/14

(54) **SIEGELWERKZEUG MIT EINEM HEIZMITTEL**

(30) Priorität: 01.07.2020 DE 102020208238
(62) Teilanmeldung aus: 21742057.9
(71) Anmelder: Gea Food Solutions Germany GmbH, 35216 Biedenkopf-Wallau (DE)
(72) Erfinder: PAUL, Reiner, 35232 Dautphetal-Elmshausen (DE)
(74) Vertreter: Kutzenberger Wolff & Partner

(57) **Zusammenfassung**

Die vorliegende Erfindung betrifft Siegel- oder Formwerkzeug einer Verpackungsmaschine. Des Weiteren betrifft die vorliegende Erfindung eine Verpackungsmaschine mit einer Formstation, die Mulden in eine Untermaterialbahn einformt, wobei ein Heizelement die Untermaterialbahn vorm und/oder beim Verformen erwärmt, und einer Siegelstation, die eine Obermaterialbahn mit der Untermaterialbahn verbindet und dafür ein Heizelement aufweist.

## Beschreibung

Die vorliegende Erfindung betrifft Siegel- oder Formwerkzeug einer Verpackungsmaschine. Des Weiteren betrifft die vorliegende Erfindung eine Verpackungsmaschine mit einer Formstation, die Mulden in eine Untermaterialbahn einformt, wobei ein Heizelement die Untermaterialbahn vorm und/oder beim Verformen erwärmt, und einer Siegelstation, die eine Obermaterialbahn mit der Untermaterialbahn verbindet und dafür ein Heizelement aufweist.

Die gattungsgemäßen Verpackungsmaschinen sind aus dem Stand der Technik bekannt. Bei diesen Verpackungsmaschinen wird in eine plane Materialbahn, beispielsweise eine Folienbahn eine Mulde durch Tiefziehen eingeformt. Dafür muss die Materialbahn vor dem Tiefziehen mit einem Heizelement erwärmt werden. Beim Tiefziehen wird die Materialbahn unterschiedlich beansprucht. Insbesondere im Bereich von Ecken und im Randbereich wird die Materialbahn wesentlich stärker gedehnt als beispielsweise am Boden der Mulde oder im Bereich der Siegelnaht. Um zu vermeiden, dass das Material in diesen Bereichen zu dünn wird, werden dickere Materialbahnen verwendet, was sich insbesondere nachteilig auf die Kosten, den Transport und die Entsorgung der herzustellenden Verpackung auswirkt. Auch beim Siegeln müssen die beiden Materialbahnen exakt aber möglichst nur lokal aufgeheizt werden.

Es war deshalb die Aufgabe der vorliegenden Erfindung, ein Siegel- oder Formwerkzeug und eine Verpackungsmaschine zur Verfügung zu stellen, die die Nachteile des Standes der Technik nicht aufweist.

Gelöst wird die Aufgabe durch Siegel- oder Formwerkzeug einer Verpackungsmaschine aufweisend ein Heizelement mit einer Heizplatte, die auf einem Träger vorgesehen und mit einem Abdeckelement abgedeckt ist, wobei das Abdeckelement mit dem Träger mittels einer Vielzahl von Verbindungsmitteln verbunden ist.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Dieser Gegenstand der vorliegenden Erfindung betrifft ein Siegel- oder Formwerkzeug einer Verpackungsmaschine mit einem Heizelement, das eine Heizplatte aufweist, die auf einem Träger vorgesehen ist. Eine Heizplatte im Sinne der Erfindung ist nicht notwendigerweise jedoch bevorzugt ein flaches zweidimensionales Objekt. Sie kann auch gewölbt oder anders 3-dimensional geformt sein. Die Heizplatte kann sich in dem Siegelwerkzeug und/oder in dem Formwerkzeug und hier insbesondere in dem Oberwerkzeug und/oder stromaufwärts von dem Formwerkzeug befinden, bezogen auf die Transportrichtung der Untermaterialbahn. Die Heizplatte kann direkt mit dem Träger verbunden sein. Vorzugsweise ist jedoch zwischen der Heizplatte und dem Träger eine Wärmeisolierung vorgesehen, beispielsweise aus einem sehr festen, wärmeisolierenden Werkstoff. Alternativ besteht die Heizplatte selbst zumindest im Wesentlichen aus Wärmeisolierung. Vorzugsweise besteht die Heizplatte aus einer Heizfolie. Auf der der zu heizenden Materialbahn zugewandten Seite des Heizelementes weist dieses ein Abdeckelement, vorzugsweise aus einem Werkstoff mit einer guten Wärmeleitfähigkeit, insbesondere Metall, vorzugsweise Aluminium oder Edelstahl auf. Vorzugsweise besteht zwischen der Heizplatte und dem Abdeckelement ein direkter und vorzugsweise vollflächiger Kontakt. Das Heizelement besteht demnach vorzugsweise aus einer Heizplatte, einem Träger und einem Abdeckelement, wobei zusätzlich eine Wärmeisolierung zwischen dem Träger und der Heizplatte vorgesehen sein kann oder der Träger zumindest teilweise als Wärmeisolierung ausgebildet ist.

Erfindungsgemäß ist das Abdeckelement mittels einer Vielzahl von Verbindungsmitteln mit dem Träger und/oder mit der Isolierung verbunden. Die Verbindungsmittel sind vorzugsweise so angeordnet, dass kein Kontakt zu der Materialbahn entsteht.

Vorzugsweise ist das Abdeckelement eine Folie oder Platte, insbesondere ein Blech oder eine Blechfolie, vorzugsweise ein Aluminiumblech oder eine Aluminiumfolie, deren Randbereich vorzugsweise zumindest abschnittsweise gebördelt oder geknickt oder gekantet ist. Vorzugsweise ist das Abdeckelement als poröses Bauteil vorgesehen.

Das Abdeckelement kann als 3D-Druckteil gefertigt sein. Vorzugsweise beträgt die Materialstärke, insbesondere die Blechstärke des Abdeckelements, 0,2 - 2 mm. Dieser Bereich hat sich als besonders vorteilhaft herausgestellt, weil bei geringerer Materialstärke, insbesondere Aluminiumblechstärke, das Abdeckelement zu Verwerfungen neigt und/oder die Wärmekapazität des Abdeckelements zu gering ist und bei einer größeren Materialstärke das gewünschte Temperaturprofil verwischt.

Vorzugsweise sind die Verbindungsmittel in dem gebördelten/geknickten/gekanteten Abschnitt des Abdeckelementes vorgesehen. Alternativ oder zusätzlich oder besonders bevorzugt sind die Verbindungsmittel auf der Rückseite des Abdeckelementes, insbesondere an dem Teil der Rückseite, der sich parallel zu der Folienbahn erstreckt, vorgesehen. Vorzugsweise sind an dem Abdeckelement Hülsen und/oder Bolzen und/oder Muttern, insbesondere Hülsen/Bolzen mit einem Gewinde vorgesehen. Die Hülsen, Bolzen und/oder Muttern werden insbesondere durch eine Schweiß- und/oder Klebeverbindung mit dem Abdeckelement verbunden. Die Hülsen können ein Innen- oder ein Außengewinde aufweisen. Die Verbindungsmittel werden vorzugsweise mit einer Schraube mit einem Innen- oder Aussengewinde verbunden. Anstelle der Schraube kann auch ein Nagel verwendet werden, was allerdings den Nachteil beinhalten kann, dass die Verbindung schlechter lösbar ist. Das Verbindungsmittel kann auch eine Nietverbindung, beispielsweise eine Blind- oder Pop-Nietverbindung sein. Ein Verbindungsmittel im Sinne der Erfindung ist kein Stoffschluss. Die Verbindung zwischen dem Abdeckmittel und dem Träger ist vorzugsweise so vorgesehen, dass das Abdeckmittel gegen die Heizplatte gespannt wird. Zwischen Abdeckelement und Heizplatte kann eine, insbesondere elastische, Wärmeleitschicht vorgesehen sein.

Vorzugsweise sind die Verbindungselemente gemäß einem Raster, insbesondere äquidistant vorgesehen.

Vorzugsweise handelt es sich bei dem Träger um ein Wärmeisolationsmaterial. Vorzugsweise ist der Träger und/oder die Wärmeisolierung, die zwischen dem Träger und der Heizplatte vorgesehen ist, nicht einstückig sondern mehrstückig, insbesondere als eine Mehrzahl von Plattensegmenten vorgesehen. Vorzugsweise sind die Abmaße von zumindest zwei Segmenten, vorzugsweise von allen Segmenten, identisch. Vorzugsweise ist ein Spalt zwischen den Segmenten vorgesehen. Ein Spalt ist insbesondere dann vorteilhaft, wenn dadurch eine gegenseitige Beeinflussung der Segmente infolge von Wärmedehnung vermieden werden kann, insbesondere von unterschiedlicher Wärmedehnung.

Vorzugsweise ist in dem Träger und/oder der Wärmeisolierung mindesten ein, vorzugsweise mehrere Kanäle vorgesehen, durch die ein Gas geführt werden kann, um die Materialbahn an das Abdeckelement zu saugen und/oder um ein Gas auszublasen, mit dem die Materialbahn geformt wird. Vorzugsweise weisen der Träger und/oder die Wärmeisolierung mindestens einen Kabelführungskanal auf. Bei mehreren Kanälen sind diese vorzugsweise gemäß einem Raster, insbesondere äquidistant, angeordnet.

Das Abdeckelement kann Ausnehmungen, insbesondere in einem, vorzugsweise gleichmäßigen, Raster aufweisen, mittels derer zwischen der dem Abdeckelement und der Materialbahn ein Unter- und/oder Überdruck erzeugt werden kann.

Die Heizplatte ist vorzugsweise eine elektrische Heizplatte, wobei die Stromversorgung vorzugsweise durch den Träger und eine gegebenenfalls vorhandene Wärmeisolierung hindurchgeführt wird und/oder durch den Träger und/oder die Wärmeisolierung erfolgt, beispielsweise induktiv.

Vorzugsweise ist an dem Abdeckelement ein Verbindungsmittel vorgesehen, das zumindest teilweise durch die Wärmeisolierung und/oder den Träger ragt und vorzugsweise mit der Wärmeisolierung und/oder dem Träger verbindbar ist. Das Verbindungsmittel befindet sich vorzugsweise auf der der Materialbahn abgewandten Seite des Abdeckelementes und besonders bevorzugt beabstandet von dessen Randbereich, vorzugsweise im Bereich von dessen Zentrum oder im Bereich von einer oder mehreren Symmetrieachsen.

Ein weiter bevorzugter oder erfindungsgemäßer Gegenstand der vorliegenden Erfindung ist ein Siegel- oder Formwerkzeug, mit dem Verpackungsmulden oder Verpackungen unterschiedlichen Querschnitts und/oder Siegelnähte mit unterschiedlicher Form hergestellt werden und das eine Heizplatte aufweist, wobei die Heizplatte pro herzustellender Mulde/Verpackung ein Leiterbahnmuster bestehend aus einer Vielzahl von L-förmigen Leiterbahnen aufweist.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Gemäß dieses Gegenstands der vorliegenden Erfindung können mit derselben Heizplatte Materialbahnen so lokal geheizt werden, dass Verpackungsmulden mit einem unterschiedlichen Querschnitt, also mit unterschiedlichen Abmessungen der Verpackung in Länge und/oder Breite, und/oder Siegelnähte mit einer unterschiedlichen Form / Geometrie hergestellt werden können. Dafür weist die Leiterplatte vorzugsweise eine Mehrzahl von Leiterbahnmustern auf, die jeweils über eine Vielzahl von Leiterbahnen, beispielsweise geraden und/oder L-förmigen Leiterbahnen oder einer Kombination davon verfügen. Pro Verpackungsmulde oder Siegelnaht werden vorzugsweise mehrere gerade und/oder L-förmige Leiterbahnen eingesetzt. Zwischen zwei L-förmigen Leiterbahnen können an einem oder beiden Enden Überbrückungselemente vorgesehen sein, die gemeinsam mit der benachbarten L-förmigen Leiterbahn oder separat von dieser elektrisch angesteuert werden können. Mehrere Leiterbahnen sind einzeln und/oder gruppenweise ansteuerbar.

Ein weiterer bevorzugter oder erfindungsgemäßer Gegenstand der vorliegenden Erfindung ist ein Siegel- oder Formwerkzeug, bei dem die Heizplatte aus einer Vielzahl von, vorzugsweise identischen, Modulen aufgebaut ist.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Erfindungsgemäß oder vorzugsweise ist die Heizplatte aus mehreren Modulen aufgebaut, die, vorzugsweise in einer Ebene, nebeneinander angeordnet sind. Jedes Modul ist vorzugsweise rechteckig, insbesondere quadratisch. Die sich durch die nebeneinander angeordneten Module ergebende Erstreckung quer zur Transportrichtung ist vorzugsweise größer als die Nutzbreite der Materialbahn. Die sich durch die nebeneinander angeordneten Module ergebende Erstreckung in Transportrichtung ist vorzugsweise größer oder gleich dem Vorzug bei einer intermittierend transportierten Materialbahn.

Vorzugsweise ist die sich durch die nebeneinander angeordneten Module ergebende Erstreckung quer zur Transportrichtung größer als der Abstand der Transportmittel, insbesondere größer als der Abstand der an den Transportmitteln angeordneten Klemmmittel, die die Materialbahn ergreifen.

Jedes Modul ist vorzugsweise individuell elektrisch angeschlossen und individuell steuer-/regelbar.

Jedes Modul weist vorzugsweise ein Raster/Pixelmuster von lokalen Heizpunkten / Pixeln auf, die jeweils separat oder gruppenweise / als Gruppe elektrisch angesteuert werden können.

Vorzugsweise befindet sich zwischen den Modulen ein Spalt, insbesondere ein um das jeweilige Modul umlaufender Spalt zwischen den Modulen einer Heizplatte. Besonders bevorzugt wird dieser Spalt zumindest teilweise vollständig so abgedichtet, dass keine nennenswerte Luftströmung durch den Spalt tritt, insbesondere im Falle einer rückseitigen Begasung der Leiterplatten, beispielsweise mit Druckluft. Vorzugsweise ist die Abdichtung zwischen zwei Modulen elastisch vorgesehen. Beispielsweise ist die Abdichtung aus einem gummiartigen Werkstoff.

Vorzugsweise weist mindestens ein Modul, vorzugsweise jedes Modul, eine Ausnehmung, vorzugsweise eine kreisförmige Ausnehmung auf, durch die ein Gas abgesaugt und/oder in Richtung der Materialbahn geblasen werden kann.

Noch ein Gegenstand der vorliegenden Erfindung ist eine Verpackungsmaschine mit einer Formstation, die Mulden in eine Untermaterialbahn einformt, wobei ein Heizelement die Untermaterialbahn vorm und/oder beim Verformen erwärmt, und einer Siegelstation, die eine Obermaterialbahn mit der Untermaterialbahn verbindet und dafür ein Heizelement aufweist, wobei die Heizelemente der Formstation und der Siegelstation zumindest im Wesentlichen, vorzugsweise vollständig identisch aufgebaut sind.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Dieser Gegenstand der vorliegenden Erfindung betrifft eine Verpackungsmaschine zur Herstellung einer Verpackung, bei der eine Untermaterialbahn, beispielsweise eine Kunststofffolie oder eine Materialbahn, die insbesondere eine Karton-, Papier oder eine sonstige von Kunststoff verschiedene Schicht aufweist, von einer Vorratsrolle abgerollt und vorzugsweise intermittierend/taktweise entlang der Verpackungsmaschine in einer Transportebene transportiert wird. In einer Formstation wird diese Unterfolienbahn dann zunächst mittels eines Tiefziehwerkzeugs geformt werden, um beispielsweise eine Mulde und/oder eine Struktur, insbesondere eine Anti-rutsch-Struktur in die Untermaterialbahn zu formen. Die Formstation weist in der Regel ein Unter- und ein Oberwerkzeug auf, die zum Formen aufeinander zu und zum Weitertransport der Untermaterialbahn voneinander wegbewegt werden. Das Unterwerkzeug befindet sich dabei unterhalb und das Oberwerkzeug oberhalb der Transportebene der Untermaterialbahn. In der Regel werden in der erfindungsgemäßen Verpackungsmaschine mehrere Verpackungen, die in einem sogenannten Format angeordnet sind, gleichzeitig bearbeitet und im Folgenden gleichzeitig entlang der Verpackungsmaschine transportiert. Vorm und/oder beim Tiefziehen wird die Untermaterialbahn mit einem Heizelement beheizt. Nachfolgend wird die Untermaterialbahn mit einem Verpackungsgut, insbesondere einem Lebensmittel, wie beispielsweise Wurst, Schinken oder Käse, belegt und in einem nächsten Schritt in einer Siegelstation mit einer Oberfolie verschlossen, wobei die Oberfolie in der Regel an die Unterfolienbahn gesiegelt wird. Dafür wird eine Heizelement eingesetzt, die die für die Siegelung benötigte Wärmeenergie zur Verfügung stellt. Anschließend wird die so fertiggestellte Verpackung vereinzelt, indem die Verpackung aus der Unter- und Obermaterialbahn ausgeschnitten wird. Die Obermaterialbahn wird ebenfalls von einer Vorratsrolle abgerollt. Bezogen auf die Transportrichtung der jeweiligen Folienbahn befindet sich stromabwärts von wenigstens einer Vorratsrolle vorzugsweise ein Tänzer, der die Spannung in der jeweiligen Materialbahn zumindest im Wesentlichen konstant hält. Bei dem Tänzer kann es sich um einen Linear- oder einen Rotationstänzer handeln.

Erfindungsgemäß werden für die Formstation und für die Siegelstation zumindest im wesentlichen identische Heizelemente, insbesondere identische Heizplatten eingesetzt. Die Heizplatten können jeweils aus mehreren Modulen, insbesondere identische Module aufgebaut sein, die nebeneinander in einer Ebene vorgesehen sind. Vorzugsweise weisen die Heizelemente identische Träger und/oder identische Wärmeisolierungen und/oder Abdeckelemente auf.

Ein weiterer Gegenstand der vorliegenden Erfindung ist eine Verpackungsmaschine mit einer Formstation, die Mulden in eine Untermaterialbahn einformt, wobei ein Heizelement die Untermaterialbahn vorm und/oder beim Verformen erwärmt, und/oder einer Siegelstation, die eine Obermaterialbahn mit der Untermaterialbahn verbindet und dafür ein Heizelement aufweist und mit Transportmitteln, die die Untermaterialbahn in einer Transportrichtung transportieren, wobei die Transportmittel in einem Abstand quer zur Transportrichtung vorgesehen sind, und die Erstreckung des Heizelements quer zur Transportrichtung > ist als der Abstand der Transportmittel.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Bei diesem Gegenstand der vorliegenden Erfindung ist die Erstreckung des Heizelements quer zur Transportrichtung der Materialbahn größer als der Abstand der beiden Transportmittel rechts und links von der Materialbahn, die die Materialbahn transportieren und/oder größer als der Abstand der Klemmmittel, die an dem Transportmittel vorgesehen sind.

Vorzugsweise ist die Heizplatte und/oder deren Module so ansteuerbar, dass, vorzugsweise mindestens, der Bereich des Heizelements, der das Transportmittel und/oder das Klemmmittel überlappt, nicht beheizt wird.

Noch ein Gegenstand der vorliegenden Erfindung ist eine Verpackungsmaschine mit einer Formstation, die Mulden in eine Untermaterialbahn einformt, wobei ein Heizelement die Untermaterialbahn vorm und/oder beim Verformen erwärmt, und/oder mit einer Siegelstation, die eine Obermaterialbahn mit der Untermaterialbahn verbindet und dafür ein Heizelement aufweist und mit Transportmitteln, die die Untermaterialbahn in einer Transportrichtung transportieren, wobei die Untermateriabahn eine Nutzbreite aufweist, wobei die Erstreckung des Heizelements quer zur Transportrichtung ≥ ist als die Nutzbreite.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Bei diesem Gegenstand der vorliegenden Erfindung ist die Erstreckung des Heizmittels quer zur Transportrichtung der Materialbahn größer oder gleich der Nutzbreite der Materialbahn quer zur Transportrichtung. Vorzugsweise ist die Erstreckung des Heizelements quer zur Transportrichtung größer als der Abstand der Transportmittel, insbesondere größer als der Abstand der an den Transportmitteln angeordneten Klemmmittel, die die Materialbahn ergreifen. Die Nutzbreite ist die Materialbahnbreite minus eines Randstreifens rechts und links bezogen auf die Transportrichtung, der zum Ergreifen der Materialbahn bzw. für Löcher für den Gasaustausch benötigt wird.

Vorzugsweise ist das Heizelement so ansteuerbar, dass der Bereich des Heizelements, der die Nutzungsbreite überragt, nicht beheizt wird.

Ein weiterer Gegenstand der vorliegenden Erfindung ist ein Verfahren zur Herstellung einer Verpackung, insbesondere mit der hier beschriebenen erfindungsgemäßen Verpackungsmaschine, bei dem eine Materialbahn mittels Druckluft geformt wird, wobei die Druckluft durch die Heizplatte geblasen wird.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Bei dieser Ausführungsform der vorliegenden Erfindung befindet sich das Heizelement innerhalb des Formwerkzeugs, insbesondere im Bereich des Oberwerkzeugs und die Formung der Materialbahn zu einer Verpackungsmulde wird durch Druckluft, die von oben auf die Materialbahn einwirkt, bewirkt und/oder unterstützt. Erfindungsgemäß strömt diese Druckluft nun durch die Heizplatte. Dafür weist die Heizplatte beispielweise eine oder mehrere Ausnehmungen, beispielsweise Bohrungen, auf. Alternativ oder zusätzlich strömt die Druckluft durch einen oder mehrere Spalte zwischen zwei Modulen, aus denen die Heizplatte besteht, und/oder durch einen um die äußeren Modulen umlaufenden Spalt.

Vorzugsweise wird die Druckluft erwärmt, d.h. sie weist eine Temperatur > 20°C auf. Diese Erwärmung wird besonders bevorzugt nicht ausschließlich durch das Heizelement bewirkt,

Im Folgenden wird die Erfindung anhand der Figuren 1 bis 7f erläutert. Diese Erläuterungen sind lediglich beispielhaft und schränken den allgemeinen Erfindungsgedanken nicht ein.
- **Figur 1**: zeigt schematisch die erfindungsgemäße Verpackungsmaschine.
- **Figuren 2a - d**: zeigen unterschiedliche Formate von Verpackungsmulden
- **Figuren 3 - 5**: zeigen eine weitere Ausführungsformen der Verpackungsmaschine.
- **Figur 6**: zeigt ein erfindungsgemäßes Heizelement
- **Figuren 7a und 7b**: zeigt zwei mögliche Formate
- **Figuren 7c und 7d**: zeigt zwei Ausführungsformen der Heizplatte

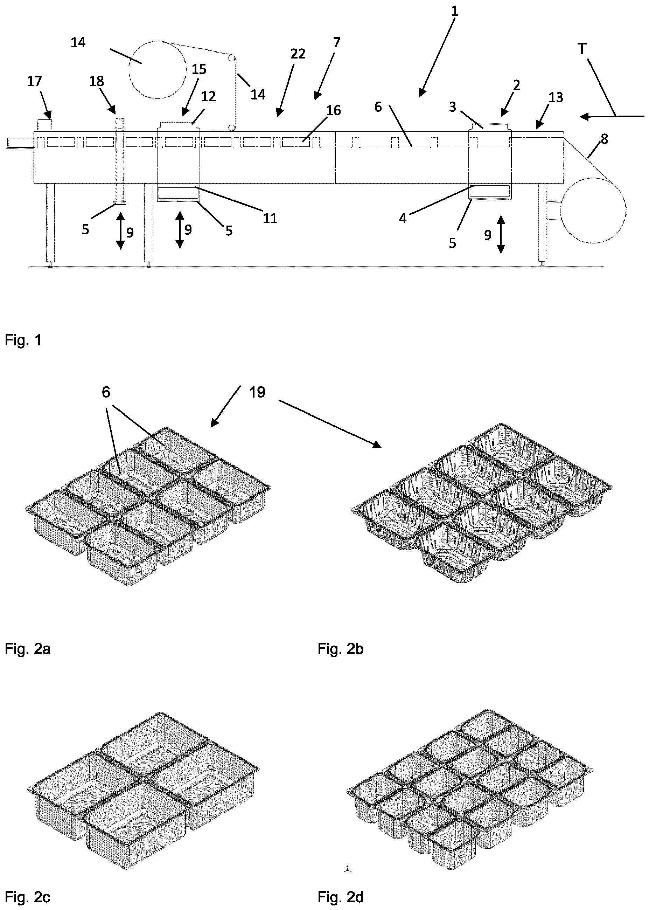

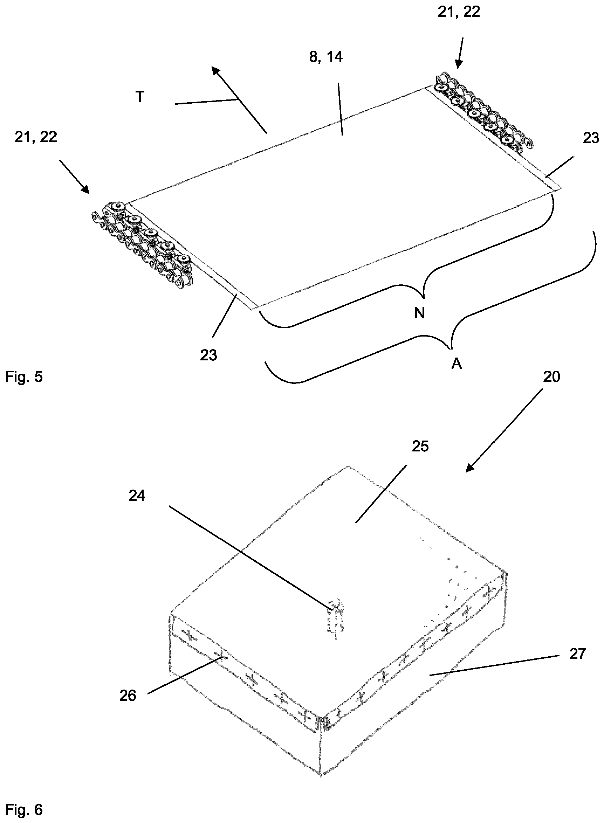

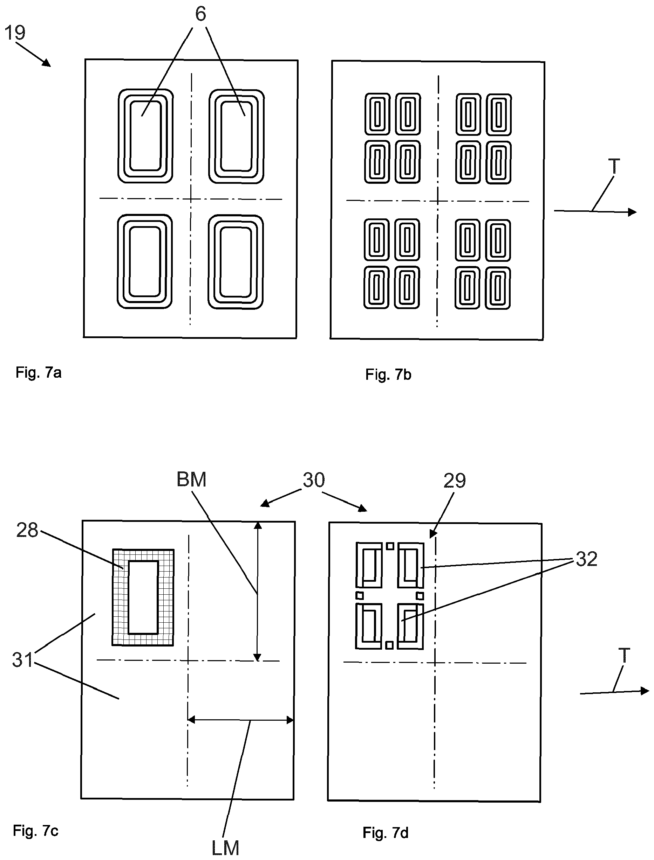

**Figur 1** zeigt die erfindungsgemäße Verpackungsmaschine 1, die optional eine Formstation 2, eine Füllstation 7 sowie eine Siegelstation 15 aufweist. Die Verpackungsmaschine kann eine sogenannter Thermoformer oder ein sogenannter Traysealer sein. Eine Untermaterialbahn 8, hier eine Kunststofffolie 8, wird von einer Vorratsrolle abgezogen und taktweise entlang der erfindungsgemäßen Verpackungsmaschine von rechts nach links transportiert. Bei jedem Takt wird die Untermaterialbahn 8 um eine Formatlänge/Vorschublänge weitertransportiert. Dafür weist die Verpackungsmaschine zwei Transportmittel 21 (siehe Fig. 5), in dem vorliegenden Fall jeweils zwei Endlosketten, auf, die rechts und links von der Untermaterialbahn 8 angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel 21 weist eine Vielzahl von Klemmmitteln/Greifern 22 auf, die die Untermaterialbahn 8 im Einlaufbereich klemmend ergreifen und die Bewegung des Transportmittels auf die Untermaterialbahn 8 übertragen. Im Auslaufbereich der Verpackungsmaschine wird die klemmende Verbindung zwischen dem Transportmittel und der Untermaterialbahn 8 wieder gelöst. Stromabwärts von dem Einlaufbereich kann ein Heizelement vorgesehen sein, das die Untermaterialbahn 8 erwärmt, insbesondere wenn diese still steht. Die Formstation 2 weist ein Unterwerkzeug 4 und ein Oberwerkzeug 3 auf. Das Unterwerkzeug 4 kann, wie durch den Doppelpfeil angedeutet, auf- und ab-bewegt werden, wobei es zum Formen nach oben in Richtung der Untermaterialbahn 8 und zum Weitertransport der Untermaterialbahn 8 nach unten bewegt wird. In der angehobenen Stellung wird die Untermaterialbahn vorzugsweise zwischen den beiden Werkzeugen 3, 4 geklemmt. Das Unterwerkzeug 4 kann auf einem Hubtisch 5 angeordnet sein, der, wie durch den Doppelpfeil symbolisiert wird, vertikal verstellbar sein kann, um die oben beschriebene Bewegung des Unterwerkzeugs zu erzeugen. Im weiteren Verlauf der Verpackungsmaschine werden die hier angedeuteten in die Untermaterialbahn geformten Verpackungsmulden 6 oder die Untermaterialbahn 8 dann in der Füllstation 7 mit dem Verpackungsgut 16 belegt. In der sich daran anschließenden Siegelstation 15, die ebenfalls aus einem Oberwerkzeug 12 und einem gegebenenfalls vertikal verstellbaren Unterwerkzeug 11 besteht, wird eine Oberfolie 14 stoffschlüssig durch Siegeln an der Untermaterialbahn 8 befestigt. Dadurch wird die Bewegung der Untermaterialbahn 8 auf die Obermaterialbahn 14 übertragen. Auch in der Siegelstation werden das Oberwerkzeug und/oder wahlweise das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur vor der Siegelstation und ggf. stromaufwärts erstrecken. Ansonsten gelten die Ausführungen, die zu den Transportmitteln der Unterfolie gemacht wurden. Auch die Oberfolie kann mit einem Heizelement angewärmt und/oder tiefgezogen werden. Für das Siegeln ist als Unterwerkzeug 11 beispielweise ein Siegelrahmen vorgesehen, der pro Verpackungsmulde eine Öffnung aufweist, in die die gegebenenfalls vorhandene Verpackungsmulde beim Siegeln, d.h. bei der Aufwärtsbewegung des Untersiegelwerkzeugs, eintaucht. Zum Siegeln werden die Ober- und die Untermaterialbahn zwischen dem Ober- und dem Unterwerkzeug 12, 11 zusammengepresst und verbinden sich unter dem Einfluss von Wärme und Druck. Nach dem Siegeln werden die Werkzeuge 11, 12 wieder vertikal auseinanderbewegt. Zwischen der Vorratsrolle der Obermaterialbahn 14 und dem Siegelwerkzeug kann ein Tänzer, beispielsweise ein Rotationstänzer vorgesehen sein, der die Materialbahn 14 möglichst auf einer konstanten Spannung hält. Der Fachmann versteht, dass auch im Bereich der Untermaterialbahn 8 vorzugsweise ein Tänzer vorgesehen ist, vorzugsweise stromabwärts von der Vorratsrolle. Vorzugsweise handelt es sich bei dem Tänzer um einen Lineartänzer. Vor und/oder beim Siegeln der Obermaterialbahn an die Untermaterialbahn erfolgt in jeder Verpackungsmulde vorzugsweise ein Gasaustausch. Dafür wird die in der Verpackungsmulde vorhandene Luft zunächst teilweise abgesaugt und/oder durch ein Austauschgas ersetzt. Dafür können im Bereich jedes Formats in die Untermaterialbahn 8 im Bereich der Transportketten Löcher in die Untermaterialbahn eingebracht werden, durch die die Luft zwischen den Materialbahnen 8, 14 abgesaugt und/oder das Austauschgas eingeblasen wird. Im weiteren Verlauf der Verpackungsmaschine werden die fertiggestellten Verpackungen vereinzelt, was z.B. mit dem Querschneider 18 und dem Längsschneider 17 erfolgt. Der Querschneider 18 ist in dem vorliegenden Fall ebenfalls mit einer Hubeinrichtung 9 anhebbar bzw. absenkbar. Gemäß einer anderen Ausführungsform weist das Siegelwerkzeug 11, 12 eine Stanze auf, die die Unter- und die Obermaterialbahn vorm, beim und/oder nach dem Siegeln durchtrennt. Vorzugsweise werden bei jedem Takt mehrere Verpackungen gleichzeitig hergestellt, die in einem sogenannten Format als Matrix angeordnet sind. Derartige Formate sind in den Figuren 2a - 2d, 7a und 7b dargestellt.

Die **Figuren 2a bis 2d** zeigen vier unterschiedliche Formate, die bei einem Vorzug der Materialbahn 8 hergestellt werden können. Vorzugsweise ist das Heizelement beziehungsweise die Verpackungsmaschine so vorgesehen, dass alle hier dargestellten Formate 19 an Verpackungsmulden 6 beziehungsweise Verpackungen hergestellt werden können, ohne dass das Heizelement 20 in der Siegelstation 15 oder das Oberwerkzeug 12 oder die Beheizung im Bereich der Formstation ausgewechselt werden müssen. Die Anpassung der Ansteuerung der Heizplatte erfolgt vorzugsweise automatisch, insbesondere Computergesteuert.

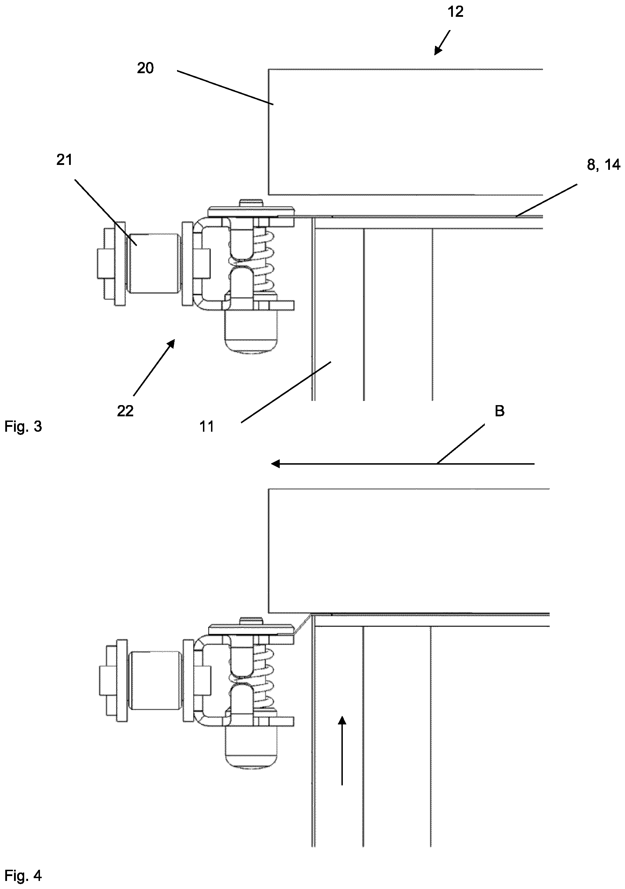

**Figuren 3 und 4** zeigen eine Ausführungsform der erfindungsgemäßen Verpackungsmaschine. Die Materialbahn 8 oder die Materialbahnen 8, 14 werden rechts und links von einem Transportmittel 21, hier einer Kette 21, an dem/der Greifer- oder Klemmmittel 22 vorgesehen sind, entlang der Verpackungsmaschine transportiert. Die Breite des Heizelements 20 ist nun so vorgesehen, dass sie größer ist als der Abstand A zwischen den Klemmmitteln 22 zueinander, so dass das Heizelement 20, zumindest die Klemmmittel beziehungsweise die Greifer 22, zumindest teilweise überragt. Das Heizelement 20 ist in dem vorliegenden Fall ortsfest vorgesehen. Zum Siegeln (vgl. Figur 4) wird das Unterwerkzeug 11 angehoben. Das Heizelement ist vorzugsweise so vorgesehen, dass in dem Bereich, der die Transportkette und/oder das Klemmmittel 22 überdeckt, keine Heizenergie freigesetzt wird.

In **Figur 5** ist eine weitere Ausführungsform der erfindungsgemäßen Verpackungsmaschine dargestellt. Auch in dem vorliegenden Fall wird eine Materialbahn 8, 14 in Transportrichtung T entlang der Verpackungsmaschine transportiert. Die Materialbahn 8, 14 wird in ihrem seitlichen Randbereich jeweils von einem Transportmittel 21, 22 ergriffen und weiter transportiert. Die für dieses Ergreifen beziehungsweise um auch gegebenenfalls Ausnehmungen für einen Gasaustausch vorsehen zu können, weist die Materialbahn jeweils rechts und links einen Randstreifen 23 auf, der für die Herstellung von Verpackungen nicht genutzt werden kann. Die Materialbahn 8, 14 weist demnach eine Nutzbreite N auf. Gemäß einer erfindungsgemäßen oder bevorzugten Ausführungsform ist die Breite B des Heizelements, d.h. dessen Erstreckung quer zur Transportrichtung T der Materialbahn, breiter vorgesehen, als die Nutzbreite N der Materialbahn 8, 14. Vorzugsweise ist die Heizplatte so steuerbar, dass trotz der Überdeckung in dem Bereich der Randstreifen 23 keine oder nur eine geringfügige Heizenergie freigesetzt wird.

**Figur 6** zeigt eine Ausführungsform des Heizelementes, dass in dem vorliegenden Fall einen Träger 27, eine Heizplatte (nicht dargestellt) sowie ein Abdeckelement 25, vorzugsweise eine Metallplatte, insbesondere eine Edelstahlplatte, aufweist. Das Abdeckelement 25 befindet sich auf der Materialbahn zugewandten Seite. Das Abdeckelement 25 kann Ausnehmungen (nicht dargestellt) aufweisen, durch die ein Unter- und/oder Überdruck zwischen dem Abdeckelement und der zu heizenden Materialbahn erzeugbar ist. Der Unterbeziehungsweise Überdruck ist dementsprechend vorzugsweise auch zwischen den Abdeckelement 25 und der sich dahinter befindenden Heizplatte vorhanden. Vorzugsweise ist das Abdeckelement in seinem Randbereich gebördelt oder geknickt. Dieser gebördelte oder geknickte Bereich wird dann mit dem Träger oder mit der gegebenenfalls vorhandenen Isolationsschicht, vorzugsweise reversibel, beispielsweise durch Schrauben, verbunden.

Das Abdeckelement kann auf seiner der Heizplatten zugewandten Seite ein Verbindungsmittel 24, beispielsweise einen Anschweißbolzen 24 aufweisen, der sich zumindest teilweise durch den Träger 27 erstreckt und mit dem die Abdeckung 25 mit dem Träger, insbesondere reversibel, verbunden werden kann. Durch das Verbindungsmittel, das sich in einem von dem Randbereich entfernten Bereich des Abdeckelements befindet, kann verhindert werden, dass sich die Abdeckung beim Aufheizen der Materialbahn und/oder beim Siegeln von der Heizplatte wegbewegt, insbesondere pulsiert oder vibriert.

Die **Figuren 7a und 7b** zeigen noch einmal zwei unterschiedliche Formate von Verpackungsmulden beziehungsweise Verpackungen, die bei einem Vorzug der Materialbahn hergestellt werden. Bei der linken Ausführungsform werden vier Verpackungsmulden und bei rechten Ausführungsform sechzehn Verpackungsmulden gleichzeitig hergestellt.

Die **Figuren 7c und 7d** zeigen zwei mögliche Ausführungsformen einer Heizplatte, mit der die Formate gemäß den Figuren 7a und 7b ohne einen Umbau der Heizelemente hergestellt werden können, wobei der Einfachheit halber nur in einem Quadranten die Heizplatte dargestellt ist. Bei der Ausführungsform gemäß Figur 7c weist die Heizplatte eine Vielzahl von Pixeln auf, die vorzugsweise gleichmäßig, insbesondere äquidistant, über die Heizplatte verteilt sind. Die Pixel können einzeln oder gruppenweise so angesteuert und erwärmt werden, dass das gewünschte Heizprofil erzeugt werden kann. In Figur 7c sind in dem oberen linken Quadranten die Pixel als Raster bildlich dargestellt, die zur Herstellung einer Verpackungsmulde gemäß Figur 7a so angesteuert werden, dass das zur Herstellung benötigte Temperaturprofil in der Materialbahn erzeugt wird. Der Fachmann versteht, dass analoges für die Herstellung der Schweißnaht gilt. Vorzugsweise ist die Heizplatte aus Modulen, insbesondere identischen Modulen aufgebaut, die jeweils eine Breite BM oder eine Länge LM aufweisen. Die Module sind vorzugsweise auf Stoß in einer Ebene angeordnet. In dem vorliegenden Fall sind vier Module dargestellt, die die Heizplatte bilden. Die Breite BM beziehungsweise Länge LM kann gleich oder unterschiedlich sein. Insbesondere kann die Breite BM des Moduls so gewählt werden, dass ihr Vielfaches nicht der Nutzbreite N der Materialbahn 8, 14 entspricht. Vorzugsweise werden mit einem Modul ein Bereich der Materialbahn beheizt, der für die Herstellung mehrerer Verpackungen ausreicht. Alternativ werden zwei Module zur Erwärmung der Materialbahn zur Herstellung einer einzigen Verpackung benötigt.

In **Figur 7d** ist eine andere Ausführungsform der Heizplatte dargestellt. In dem vorliegenden Fall weist die Heizplatte ein Muster 29 von Leiterbahnen auf, die vorzugsweise jeweils individuell oder als Gruppe angesteuert werden können. Vorzugsweise besteht jedes Muster aus einer Vielzahl von L-förmigen Leiterbahnen 32. Jeweils an einem oder an beiden Enden eines L können Überbrückungsleiterbahnen vorgesehen sein. Der Fachmann versteht, dass diese Leiterbahnen in jedem Quadranten der Heizplatte gemäß Figur 7d vorhanden sind.

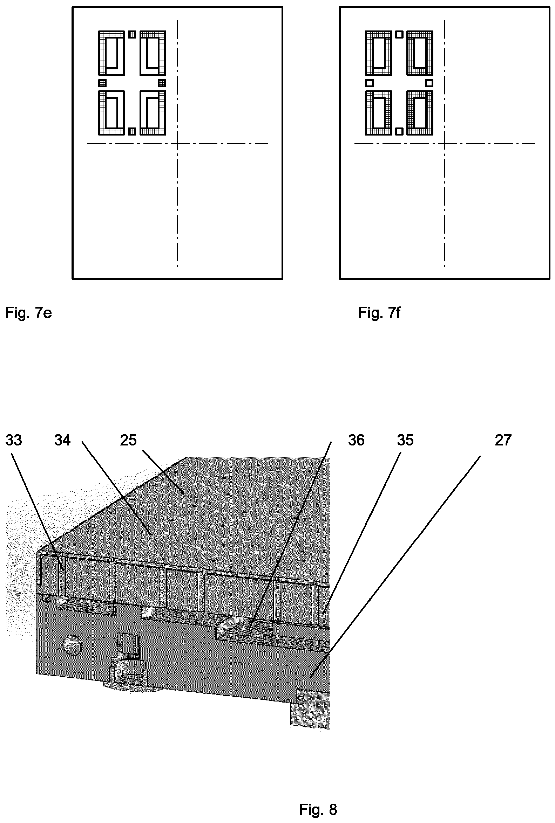

Die Ansteuerung des Leiterbahnenmusters 29 gemäß Figur 7d ist in den **Figuren 7e und 7f** dargestellt. Zur Herstellung einer Verpackungsmulde 6 oder einer Siegelnaht gemäß der Ausführungsform 7a, werden die vier äußeren L-förmigen Leiterbahnen sowie die sich dazwischen befindenden Überbrückungselemente elektrisch angesteuert, während an die innenliegenden L-förmigen Elemente keine Spannung angelegt wird. Zur Herstellung des Formates beziehungsweise der dazugehörigen Siegelnähten gemäß Figur 7b, werden wiederum die vier außenliegenden L-förmigen Leiterbahnen aber jetzt auch die vier innenliegenden L-förmigen Leiterbahnen elektrisch angesteuert, während die Überbrückungselemente in dem vorliegenden Fall nicht mit Spannung versorgt werden. Durch eine einfache Änderung der Ansteuerung kann von eine Verpackungsform auf die andere umgeschwenkt werden.

Figur 8 zeigt eine Ausführungsform des erfindungsgemäßen Heizelementes 20, die in dem vorliegenden Fall ein Abdeckelement 25 und eine Trägerplatte 27 aufweist. Zwischen dem Abdeckelement 25 und der Trägerplatte 27 ist in dem vorliegenden Fall eine Wärmeisolierung 35 vorgesehen. Die Heizmodule (nicht dargestellt) befinden sich zwischen der Wärmeisolierung 35 und dem Abdeckelement. Die Wärmeisolierung ist vorzugsweise aus mehreren Segmenten aufgebaut. In dem vorliegenden Fall sind in der Wärmeisolierung 35 Gaskanäle 33 vorgesehen, die mit Bohrungen 34 in dem Abdeckmittel in Verbindung stehen. Durch die ein Gaskanäle 33 und die Bohrungen 34 kann ein Gas, vorzugsweise Luft, angesaugt oder abgeblasen werden. Der Fachmann versteht, dass auch die Heizplatte, die sich zwischen dem Abdeckmittel 25 und der Wärmeisolierung befindet, entsprechende Gaskanäle sein müssen, die vorzugsweise deckungsgleich mit den Kanälen 33, 34 vorgesehen sind. In der Trägerplatte sind in dem vorliegenden Fall Gassammelkanäle vorgesehen, die ein Gas zu den Kanälen 33 hin oder davon weg leiten.

Die Abdeckplatte ist mittels Schrauben mit der Trägerplatte verbunden.

### Bezugszeichenliste:

- 1: Verpackungsmaschine
- 2: Formstation, Tiefziehstation
- 3: Oberwerkzeug der Formstation, Oberwerkzeug der Tiefziehstation
- 4: Unterwerkzeug der Formstation, Oberwerkzeug der Tiefziehstation
- 5: Hubtisch, Träger eines Werkzeugs der Siegel-, Tiefziehstation und/oder der Schneideinrichtung
- 6: Verpackungsgutträger, Verpackungsmulde, Unterschale, Tray
- 7: Füllstation, Einlegestation
- 8: Materialbahn, Untermaterialbahn
- 9: Hubeinrichtung
- 10: Stanzmittel
- 11: Unterwerkzeug der Siegelstation
- 12: Oberwerkzeug der Siegelstation, Siegelwerkzeug
- 13: Vorheizung (beispielsweise stromaufwärts der Formstation)
- 14: Obermaterialbahn, Deckelmaterialbahn
- 15: Siegelstation
- 16: Verpackungsgut
- 17: Längsschneider
- 18: Querschneider
- 19: Format
- 20: Heizelement
- 21: Transportmittel, Kette
- 22: Klemmmittel, Greifer
- 23: Randstreifen
- 24: Verbindungsmittel
- 25: Abdeckelement
- 26: Verbindungsmittel, Schraube
- 27: Träger
- 28: Pixelmuster, Pixel
- 29: Leiterbahnmuster
- 30: Heizplatte
- 31: Modul
- 32: Leiterbahn, L-förmige Leiterbahn
- 33: Gaskanal
- 34: Gasaustrittsöffnung
- 35: Isolierung
- 36: Gassammelkanal
- N: Nutzbreite
- A: Abstand der Transportmittel
- B: Abmessung der Heizplatte quer zur Transportrichtung der Warenbahn
- BM: Abmessung Modul, Breite Modul
- LM: Abmessung Modul, Länge Modul
- T: Transportrichtung der Materialbahn

## Patentansprüche

1. Siegel- oder Formwerkzeug (3, 12) einer Verpackungsmaschine (1) aufweisend ein Heizelement (20) mit einer Heizplatte (30), die auf einem Träger (27) vorgesehen und die mit einem Abdeckelement (25) abgedeckt ist, **dadurch gekennzeichnet, dass** das Abdeckelement (25) mit dem Träger mittels einer Vielzahl von Verbindungsmitteln verbunden ist.

2. Siegel- oder Formwerkzeug (3, 12) nach Anspruch 1, **dadurch gekennzeichnet, dass** an dem Abdeckelement ein Verbindungsmittel (24) vorgesehen ist, dass zumindest teilweise durch die Wärmeisolierung und/oder den Träger ragt.

3. Siegel- oder Formwerkzeug (3, 12) nach einem der voranstehenden Ansprüche oder dem Oberbegriff von Patentanspruch 1, mit dem Verpackungsmulden (6) oder Verpackungen unterschiedlichen Querschnitts und/oder Siegelnähte mit unterschiedlicher Form hergestellt werden und das eine Heizplatte (30) aufweist, **dadurch gekennzeichnet, dass** die Heizplatte pro herzustellender Mulde/Verpackung ein Leiterbahnmuster (29) bestehend aus einer Vielzahl von L-förmigen Leiterbahnen (32) aufweist.

4. Siegel- oder Formwerkzeug (3, 12) nach Anspruch 3, **dadurch gekennzeichnet, dass** mehrere Leiterbahnen (32) einzeln und/oder gruppenweise ansteuerbar sind.

5. Siegel- oder Formwerkzeug (3, 12) nach einem der Ansprüche 1 oder 2 oder dem Oberbegriff von Patentanspruch 1, **dadurch gekennzeichnet, dass** die Heizplatte aus einer Vielzahl von, vorzugsweise identischen, Modulen (31) aufgebaut ist.

6. Siegel- oder Formwerkzeug (3, 12) nach Anspruch 5, **dadurch gekennzeichnet, dass** sich zwischen den Modulen ein Spalt befindet, der vorzugsweise abgedichtet ist, insbesondere mit einem elastischen Material.

7. Verpackungsmaschine (1) mit einer Formstation (2), die Mulden (6) in eine Untermaterialbahn (8) einformt, wobei ein Heizelement (20) die Untermaterialbahn (8) vorm und/oder beim Verformen erwärmt, und einer Siegelstation, die eine Obermaterialbahn (14) mit der Untermaterialbahn (8) verbindet und dafür ein Heizelemente (20) aufweist, **dadurch gekennzeichnet, dass** die Heizelemente (20) zumindest im Wesentlichen identisch aufgebaut sind.

8. Verpackungsmaschine (1) mit einer Formstation (2), die Mulden (6) in eine Untermaterialbahn (8) einformt, wobei ein Heizelement (20) die Untermaterialbahn (8) vorm und/oder beim Verformen erwärmt, und/oder mit einer Siegelstation, die eine Obermaterialbahn (14) mit der Untermaterialbahn (8) verbindet und dafür ein Heizelement (20) aufweist und mit Transportmitteln (21, 22), die die Untermaterialbahn in einer Transportrichtung (T) transportieren, wobei die Transportmittel in einem Abstand (A) quer zur Transportrichtung (T) vorgesehen sind, **dadurch gekennzeichnet, dass** die Erstreckung (B) des Heizelements quer zur Transportrichtung (T) > ist als der Abstand (A).

9. Verpackungsmaschine (1) mit einer Formstation (2), die Mulden (6) in eine Untermaterialbahn (8) einformt, wobei ein Heizelement (20) die Untermaterialbahn (8) vorm und/oder beim Verformen erwärmt, und/oder mit einer Siegelstation, die eine Obermaterialbahn (14) mit der Untermaterialbahn (8) verbindet und dafür ein Heizelement (20) aufweist und mit Transportmitteln (21, 22), die die Untermaterialbahn in einer Transportrichtung (T) transportieren, wobei die Untermateriabahn (8) eine Nutzbreite (N) aufweist, **dadurch gekennzeichnet, dass** die Erstreckung (B) des Heizelements quer zur Transportrichtung (T) ≥ ist als die Nutzbreite (N).

10. Verfahren zur Herstellung einer Verpackung, insbesondere mit einer Verpackungsmaschine gemäß einem der Ansprüche 7 - 9, bei dem eine Materialbahn mittels Druckluft geformt wird, **dadurch gekennzeichnet**, das die Druckluft durch die Heizplatte geblasen wird.

11. Verfahren nach Anspruch 10 , **dadurch gekennzeichnet, dass** die Druckluft erwärmt wird.
